(19) Europäisches Patentamt
European Patent Office
Office européen des brevets

(11) **EP 4 776 549 A1**

(12) **EUROPEAN PATENT APPLICATION**
published in accordance with Art. 153(4) EPC

(43) Date of publication:
**15.07.2026   Bulletin 2026/29**

(21) Application number: **24863298.6**

(22) Date of filing: **10.09.2024**

(51) International Patent Classification (IPC):
**H04L 1/1812** (2023.01)

(52) Cooperative Patent Classification (CPC):
**H04L 1/1812;** Y02D 30/70

(86) International application number:
**PCT/KR2024/013673**

(87) International publication number:
**WO 2025/053719 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **10.09.2023   US 202363537541 P**
**10.09.2023   US 202363537542 P**
**27.09.2023   KR 20230131220**

(71) Applicant: **LG Electronics Inc.**
**Seoul 07336 (KR)**

(72) Inventors:
• **LEE, Youngdae**
**Seoul 06772 (KR)**
• **YANG, Suckchel**
**Seoul 06772 (KR)**
• **KIM, Seonwook**
**Seoul 06772 (KR)**
• **MYUNG, Sechang**
**Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR NETWORK ENERGY SAVING IN WIRELESS COMMUNICATION SYSTEM**

(57)    Disclosed are a method and an apparatus for network energy saving in a wireless communication system. A method performed by a terminal, according to one embodiment of the present disclosure, comprises the steps of: receiving pattern information for an active period and an inactive period of cell-related DTX/DRX; and performing measurement on at least one of a serving cell or a neighbor cell on the basis of the pattern information. Here, on the basis of the measurement for the serving cell being performed during the inactive period, the measurement for the serving cell during the inactive period may correspond to restricted measurement performed on the basis of a preset condition.

FIG.7

```
        START
          │
          ▼
┌──────────────────────────┐
│ Receive pattern information for │ ── S710
│ active period and non-active period │
│      of cell DTX/DRX     │
└──────────────────────────┘
          │
          ▼
┌──────────────────────────┐
│   Based on pattern information, │ ── S720
│ perform measurement on at least one │
│  of serving cell or neighbor cell │
└──────────────────────────┘
          │
          ▼
         END
```

EP 4 776 549 A1

## Description

[Technical Field]

The present disclosure relates to a wireless communication system, and in more detail, relates to a method and an apparatus for network energy saving in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical object of the present disclosure is to provide a method and an apparatus for network energy saving in a wireless communication system.

The technical objects to be achieved by the present disclosure are not limited to the above-described technical objects, and other technical objects which are not described herein will be clearly understood by those skilled in the pertinent art from the following description.

[Technical Solution]

A method performed by a terminal in a wireless communication system according to an aspect of the present disclosure may include receiving pattern information for at least one of an active period or a non-active period of cell-related discontinuous transmission (DTX) or discontinuous reception (DRX); and based on the pattern information, performing measurement on at least one of a serving cell or a neighbor cell. Here, based on measurement on the serving cell being performed during the non-active period, the measurement on the serving cell during the non-active period may correspond to restricted measurement performed based on a pre-configured condition.

A method performed by a base station in a wireless communication system according to an additional aspect of the present disclosure may include transmitting pattern information for at least one of an active period or a non-active period of cell-related discontinuous transmission (DTX) or discontinuous reception (DRX); and receiving a measurement report for at least one of a serving cell or a neighbor cell based on the pattern information. Here, based on measurement on the serving cell being performed during the non-active period, the measurement on the serving cell during the non-active period may correspond to restricted measurement performed based on a pre-configured condition.

[Technical Effects]

According to various embodiments of the present disclosure, a method and an apparatus for network energy saving in a wireless communication system may be provided.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram for describing the operation of a terminal in a wireless communication system to which the present disclosure may be applied.

FIG. 8 is a diagram for describing the operation of a base station in a wireless communication system to which the present disclosure may be applied.

FIG. 9 illustrates the block diagram of a wireless communication device according to an embodiment of the present disclosure.

[Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV:

Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The technology described in the present specification may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented by a wireless technology such as universal terrestrial radio access (UTRA) or CDMA2000. TDMA may be implemented by a wireless technology such as global system for mobile communications (GSM)/ general packet radio service (GPRS)/ enhanced data rates for GSM evolution (EDGE). OFDMA may be implemented by a wireless technology such as institute of electrical and electronics engineers (IEEE) 802.11 (Wi-Fi), IEEE 802.16 (WiMAX), IEEE 802-20, evolved UTRA (E-UTRA), long term evolution (LTE), and 5G NR.

The technology described in the present specification may be implemented by 6G wireless technology, and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, tactile internet, high throughput, high network capacity, high energy efficiency, low backhaul and access network congestion, and enhanced data security.

To clarify description, it is described based on a 3GPP communication system (e.g., LTE-A, NR, 6G), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR/6G may be referred to as a 3GPP system. "xxx" means a detailed number for a standard document. LTE/NR/6G may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator

- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (machine type communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

The aforementioned NR system is a new clean-slate type mobile communication system as a successor technology of long term evolution (LTE), having characteristics such as high performance, low latency, and high availability. In the case of the NR system, all available spectrum resources can be utilized, such as a low frequency band below 1 GHz, a mid-frequency band of 1 GHz to 10 GHz, and a high frequency (millimeter wave) band of 24 GHz or higher. Based on the fundamental technology of the NR system, a 6G mobile communication system (hereinafter, 6G system) is being developed.

The 6G system is aimed at (i) a very high data rate per device, (ii) a very large number of connected devices, (iii) global connectivity, (iv) very low latency, (v) reduction of energy consumption of battery-free internet of things (IoT) devices, (vi) ultra-reliable connectivity, and (vii) connected intelligence having machine learning capability. The vision of the 6G system may be four aspects such as intelligent connectivity, deep connectivity, holographic connectivity, and ubiquitous connectivity.

The NR system and a new RAT system (hereinafter, next-generation RAT system) including the 6G system uses an OFDM transmission scheme or a transmission scheme similar thereto. A next-generation RAT system may follow OFDM parameters different from OFDM parameters of LTE. Alternatively, a next-generation RAT system may follow the numerology of the existing LTE/LTE-A as it is, but may support a larger system bandwidth (e.g., 100 MHz). Alternatively, one cell may support a plurality of numerologies. That is, terminals operating with different numerologies may coexist in one cell.

A numerology corresponds to one subcarrier spacing in a frequency domain. As a reference subcarrier spacing is scaled by an integer N, a different numerology may be defined.

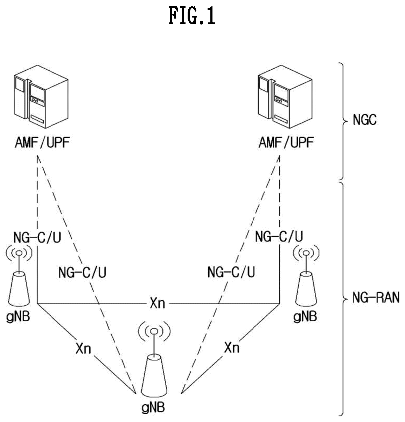

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

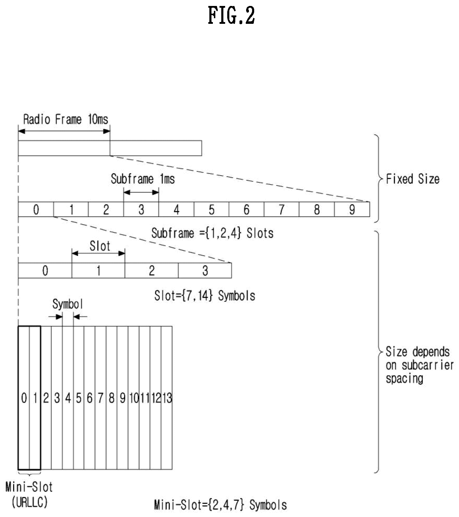

FIG. 2 illustrates a frame structure in a wireless communication system to which the present disclosure may be applied.

A next-generation RAT system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a next-generation RAT system.

Hereinafter, an OFDM numerology and frame structure which may be considered in a next-generation RAT system will be described. A plurality of OFDM numerologies supported in a next-generation RAT system may be defined as in the following Table 1.

[Table 1]

| μ | $\Delta f=2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

A next-generation RAT system supports a plurality of numerologies (or subcarrier spacings (SCS)) for supporting a variety of 5G/6G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. Although not described in Table 1, 6G systems may additionally support 480kHz/960kHz SCS.

The frequency bands of next-generation RAT systems are defined by various types of frequency ranges (e.g., FR1, FR2, etc.). For example, FR1 and FR2 may be configured as shown in Table 2 below. Additionally, FR2 may refer to millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in a next-generation RAT system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max} N_f/100) \cdot T_c=10$ms. Here, a radio frame is configured with 10 subframes having a duration of $T_{sf}=(\Delta f_{max} N_f/1000) \cdot T_c=1$ms, respectively. In this case, there may be one set of frames for an uplink and one set of frames for a downlink.

In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a next-generation RAT system, an antenna port, a resource grid, a resource element, a resource block, a carrier part, etc. may be considered. Hereinafter, the physical resources which may be considered in a next-generation RAT system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

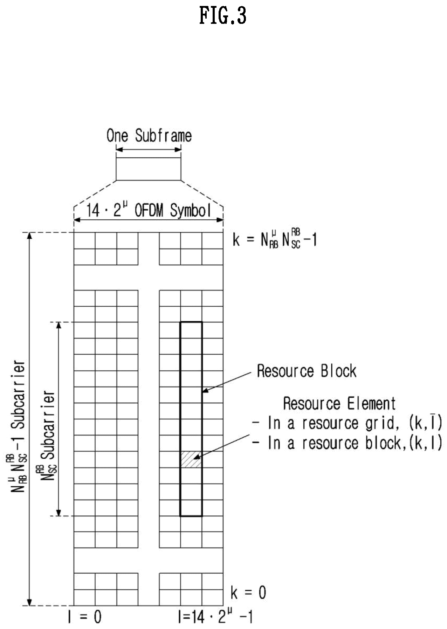

FIG. 3 illustrates a resource grid in a wireless communication system to which the present disclosure may be applied.

In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In a next-generation RAT system, a transmitted signal is described by OFDM symbols of $2^{\mu} N_{symb}^{(\mu)}$ and one or more resource grids configured with $N_{RB}^{9} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu} N_{sc}^{RB}-1$ is an index in a frequency domain and $l'=0,...,2^{\mu} N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l}^{(p,\mu)}$. When there is no risk of confusion or when a specific antenna port or numerology is not specified, indexes p and μ may be dropped, whereupon a complex value may be $a_{k,l}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{Bwp,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

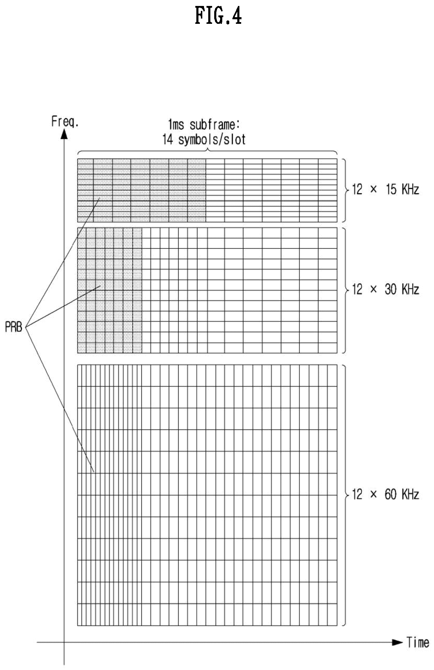

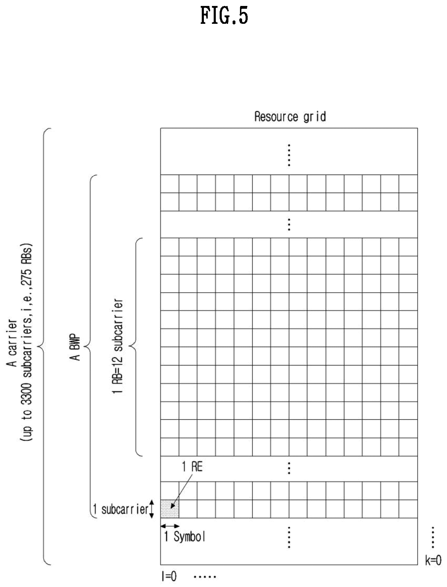

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In a next-generation RAT system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

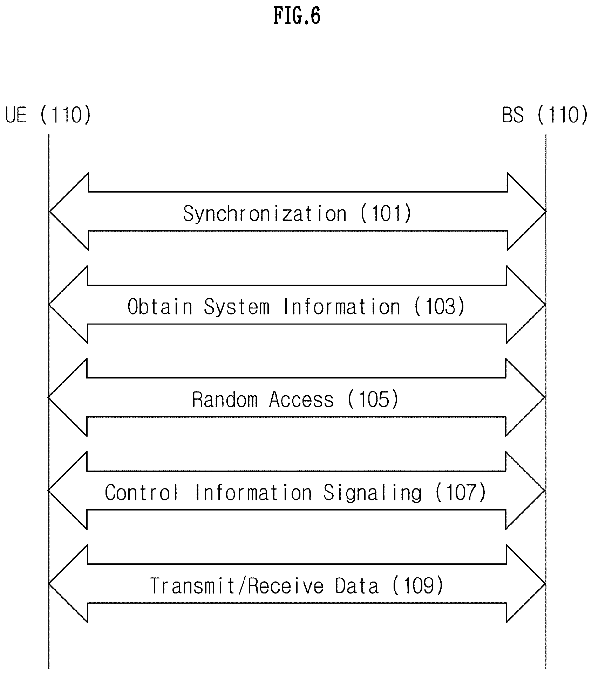

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

The second node of FIG. 6 supports dynamic spectrum sharing (DSS), and may provide connection not only to nodes in which 6G technology is implemented but also to nodes in which pre-6G wireless communication (e.g., 5G, 4G) technology is implemented. That is, the first node of FIG. 6 may have 6G technology implemented or pre-6G wireless communication (e.g., 5G, 4G) technology implemented. In addition, the first node and/or the second node may support not only a non-overlapping full duplex mode but also a full duplex mode.

In FIG. 6, for the sake of simplification of explanation, the first node and the second node are assumed to be a user equipment (UE) and a base station, respectively, and an operation in which a UE (110) and a base station (120) transmit and/or receive data, and operations performed prior thereto, are illustrated. However, the operation of FIG. 6 is not limited to an operation between a UE and a base station, and may be interpreted as an operation between the first node and the second node. In addition, in FIG. 6, a direct transmission/reception operation of wireless signals between the UE (110) and the base station (120) is illustrated, but one or more intermediate points may exist between the UE (110) and the base station (120), and a wireless signal may be transmitted and received via the one or more intermediate points.

Referring to FIG. 6, in step 101, the UE (110) and the base station (120) perform synchronization. For example, the UE (110) performs an initial cell search operation. Specifically, the UE (110) may detect at least one synchronization signal for base station connection, which is transmitted from the base station (120) according to a predefined rule. Here, the synchronization signal may include a plurality of synchronization signals classified according to structure or use (e.g., a first synchronization signal (e.g., a primary synchronization signal), a second synchronization signal (e.g., a secondary synchronization signal), etc.). Through this, the UE (110) may identify a boundary of a unit (e.g., a frame, a subframe, a slot, and/or a symbol) constituting radio signal transmission of the base station (120), and may acquire information (e.g., a cell identifier) on the base station (120).

In step 103, the UE (110) acquires system information transmitted from the base station (120). The system information is information related to attributes, characteristics, and/or capabilities of the base station (120) necessary for accessing the base station (120) and using services, and may be classified according to contents (e.g., whether it is essentially required for access), transmission structure (e.g., channel used, whether it is provided on-demand), etc. For example, the system information may be classified into first system information (e.g., a master information block (MIB), primary system information), second system information (e.g., a system information block (SIB), secondary system information), etc. If necessary, the UE (110) may transmit a signal requesting system information before receiving the system information. However, the requesting and providing of the system information may be performed after a random access procedure described later.

In step 105, the UE (110) and the base station (120) perform a random access procedure. The UE (110) may transmit and/or receive at least one message (e.g., a random access preamble, a random access response (RAR) message, etc.) for the random access procedure, based on information related to a channel for the random access procedure of the base station (120), which is acquired through the system information (e.g., channel location, channel structure, structure of supported preambles, etc.). For example, the UE (110) may transmit a first message (e.g., preamble, MSG1) through a channel for the random access procedure, receive a second message (e.g., RAR message, MSG2), transmit a third message (e.g., MSG3) including information (e.g., identification information) related to the UE (110) to the base station (120) using scheduling information included in the second message, and receive a fourth message (e.g., MSG4) for contention resolution and/or connection establishment. In another example, the first message and the third message may be transmitted and received as one message, or the second message and the fourth message may be transmitted and received as one message.

In step 107, the UE (110) and the base station (120) perform signaling of control information. Here, the control information may be defined in various layers, such as a layer controlling connection (e.g., a radio resource control (RRC) layer), a layer processing mapping between logical channels and transport channels (e.g., a media access control (MAC) layer), and a layer processing physical channels (e.g., a physical (PHY) layer). For example, the UE (110) and the base station (120) may perform at least one of signaling for establishing connection, signaling for determining configuration related to communication, and signaling for indicating allocated resources.

In step 109, the UE (110) and the base station (120) transmit and/or receive data. In other words, the UE (110) and the base station (120) process data and may transmit and/or receive the data based on the signaling of the control information. For example, when transmitting data, the UE (110) or the base station (120) may perform at least one of channel encoding, rate matching, scrambling, constellation mapping, layer mapping, waveform modulation, antenna mapping, and resource mapping for information bits. Conversely, when receiving data, the UE (110) or the base station (120) may perform at least one of signal extraction from resources, waveform demodulation per antenna, signal placement considering layer mapping, constellation demapping, descrambling, and channel decoding.

Table 5 represents an example of a DCI format in a next-generation RAT system.

[Table 5]

| DCI Format | Use |
|------------|-----|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0 0, 0_1and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier Cell RNTI) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

A network energy saving method according to cell-based discontinuous transmission(DTX)/discontinuous reception(DRX)

The symbols/abbreviations/terms used in the present disclosure are as follows.

- NES: Network Energy Saving
- ES: Energy Saving
- SSB: Synchronization Signal/PBCH Block
- FR: Frequency Range
- CC: Component Carrier
- NCGI : NR Cell Global Identifier
- SI: System Information
- PCell: Primary Cell
- SCell: Secondary Cell
- PDCCH: Physical Downlink Control Channel
- PDSCH: Physical Downlink Shared Channel
- PUSCH: Physical Uplink Shared Channel
- CSI: Channel State Information
- RRM: Radio Resource Management
- SCS: Sub-carrier Spacing
- RLM: Radio Link Monitoring
- DCI: Downlink Control Information
- CAP: Channel Access Procedure
- Ucell: Unlicensed Cell
- TBS: Transport Block Size
- TDRA: Time Domain Resource Allocation
- SLIV: Starting and Length Indicator Value (As an indication value for a start symbol index and the number of symbols within the slot of a PDSCH and/or a PUSCH, it may be configured as the component of an entry that constructs a TDRA field within a PDCCH that schedules a corresponding PDSCH and/or PUSCH.)

- BWP: BandWidth Part (It may be composed of consecutive resource blocks (RBs) on a frequency axis and may correspond to one numerology (e.g., subcarrier spacing, a CP length, a slot/mini-slot period). In addition, multiple BWPs may be configured on a carrier (the number of BWPs per carrier may also be limited), but the number of activated BWPs may be limited to a part thereof (e.g., 1) per carrier.)
- CORESET: Control Resourse Set (It refers to a time-frequency resource area in which a PDCCH may be transmitted, and the number of CORESETs per BWP may be limited.)
- REG: Resource Element Group
- SFI: Slot Format Indicator (As an indicator indicating a symbol level DL/UL direction within specific slot(s), it is transmitted through a group common PDCCH.)
- COT: Channel Occupancy Time
- SPS: Semi-persistent Scheduling
- QCL: Quasi-Co-Location (A QCL relationship between two reference signals (RS) may mean that a QCL parameter such as doppler shift, doppler spread, average delay, delay spread, a spatial Rx parameter, etc. obtained from one reference signal may also be applied to other reference signals (or antenna port(s) of a corresponding RS).
- TCI: Transmission Configuration Indication
- SRI: SRS Resource Indicator
- TRP: Transmission and Reception Point

Since the energy saving of a base station may contribute to building an eco-friendly network by reducing carbon emissions and reducing the operational expenditure (OPEX) of commoncarriers, it is importantly considered in a wireless communication system. In particular, as the introduction of 5G communications requires a high transmission rate, base stations must be equipped with more antennas and provide services through a wider bandwidth and frequency band. As a result, a recent study shows that the energy cost of a base station has reached 20% of the total OPEX.

Considering this, in a next-generation wireless communication system, the following methods are being considered to improve an energy saving capability from the transmission and reception perspective of a base station.

- A method for dynamically and/or semi-statically achieving more efficient operation through potential terminal support information and potential support/feedback from a terminal and finer granularity adaptation of transmission and/or reception for one or more network energy saving technologies in time, frequency, spatial and power domains

In particular, the present disclosure specifically describes a method, measurement and a DCI format for activating/deactivating a cell DTX/DRX configuration in the unit of a cell and/or a cell group when a base station intends to perform a cell DTX/DRX operation for operating with an ON/OFF duration pattern periodicity repeated for energy saving.

After initially connecting to a base station and entering a connected mode (e.g., an RRC connected mode), a terminal must continuously perform PDCCH monitoring to check if there is transmission scheduled for it in each configured search space (SS). However, unless this scheduling always exists, a terminal's battery may be consumed quickly because a PDCCH monitoring operation is performed unnecessarily every time. Accordingly, a base station may configure for a terminal a time duration (e.g., an ON period) during which PDCCH monitoring must be performed and a time duration (e.g., an OFF period) during which PDCCH monitoring does not need to be performed. Through this, a base station may configure connected mode discontinuous reception (C-DRX) to achieve a terminal's power saving effect.

In this regard, from the perspective of a base station, the C-DRX of a terminal may also be helpful of energy saving (ES), and it does not need to transmit the PDCCH of a specific terminal during the C-DRX OFF duration of a corresponding terminal, so a corresponding resource may be used for other purposes or an ES gain may be obtained through DTX/DRX. However, since a terminal may perform transmission without any restriction as needed in pre-configured resources (e.g., an SR, a PUCCH, a CG-PUSCH, etc.) even during an OFF period, a base station must wait for a terminal's UL reception, which is unclear of a transmission time. In addition, since C-DRX is configured in a terminal-specific way, a DRX cycle or an ON/OFF duration is not aligned for each terminal within a cell, so if the ON duration of terminals is configured in a TDM format, a base station may not sleep for PDCCH transmission for each ON duration and may not expect the ES gain.

Considering the above-described information, the present disclosure proposes methods in which a base station saves energy through limited DTX/DRX that completely turns off transmission/reception or allows the transmission/reception of a specific signal/channel during a specific time period through the cell DTX/DRX operation (i.e., cell-specific DTX/DRX operation) of a base station. Additionally, when cell DTX/DRX is combined with the DRX operation of terminal(s) within a cell, a terminal operation method for each time period is also described.

For clarity of explanation, the present disclosure mainly describes a method in which cell DTX/DRX is combined with the connected mode DRX (C-DRX) operation of a terminal and a method in which cell DTX/DRX operates based on this, but it may also be applied and extended equally to other DRX operations of a terminal (e.g., idle mode DRX) as well as C-DRX.

For example, in the present disclosure, when a base station operates in an NES mode for energy saving, it may mean that a base station operates to achieve the power consumption saving of a base station and a terminal by configuring a plurality of OFF durations (e.g., DTX durations of a base station) in advance that turn off the transmission of a specific DL signal during a specific time duration and dynamically indicating one of the OFF durations to indicate that a corresponding DL signal will not be transmitted during a predefined time duration. Additionally, it may refer to an operation mode in which a base station does not perform transmission/reception through BWP switching, dynamic RB adaptation, etc. in a time domain and a frequency domain and the specific reception antenna port of a base station in a spatial domain (e.g., when a corresponding antenna port is turned off semi-statically or dynamically), thereby achieving the power consumption saving of a base station and a terminal.

A terminal may perform PDCCH monitoring during a periodic ON duration to check if there is a DL/a UL to be transmitted and/or received. When a PDCCH is received through it, DL reception or UL transmission may be performed according to a corresponding indication. For a UL, a terminal may wake from a sleep mode and transmit an SR when there is data to be transmitted to a UL buffer regardless of a C-DRX operation. In addition, an idle mode terminal periodically performs paging monitoring and when it is not a target terminal, it may perform an idle mode DRX (I-DRX) operation for re-entering a sleep mode. Here, when a terminal operates in a sleep mode, it may refer to operating regardless of the active time determined by C-DRX or operating even in a duration other than the active time determined by C-DRX.

In the C-DRX operation of a terminal, when a time duration consisting of an ON duration and an OFF duration is repeated, it may be referred to as a DRX cycle. Here, the length of a DRX cycle is defined as a duration from the start point of an ON duration to the next ON duration and a long DRX cycle and a short DRX cycle are defined. If the length of a DRX cycle increases, latency may increase because a base station must wait until the next ON duration of a terminal when a PDSCH to be transmitted immediately after the end of a terminal's specific ON duration occurs. From a base station's perspective, since a terminal does not perform P-CSI or SRS transmission during an OFF period, a corresponding resource may be allocated to other terminals to improve resource utilization and a base station may also operate by switching to an energy saving mode for power saving during a terminal's OFF duration.

Additionally, with respect to a C-DRX operation, a long DRX cycle and a short DRX cycle may be configured simultaneously and a long DRX cycle may be configured as the integer multiple of a short DRX cycle (here, an onDurationTimer value is equal to each other). In this regard, a terminal may operate in a long DRX cycle when there is no data activity (e.g., when there is no PDCCH reception) during the ON duration of a long DRX cycle, and may operate in a DRX cycle as short as drx-ShortCycleTimer when there is a data activity and then operate by switching back to a long DRX cycle when there is no data activity during the ON duration of a short DRX cycle. In this case, the start of an ON duration in a short DRX cycle may be determined by a drx-StartOffset value and a drx-SlotOffet value, similar to a long DRX cycle.

A base station may instruct a terminal to enter a DRX sleep mode immediately without operating in an active mode until the end of an ON duration through a DRX command MAC CE. In other words, a base station may instruct a terminal to terminate a current active time and immediately enter a DRX cycle. If only a long DRX cycle is configured for a terminal, a corresponding terminal may operate in a long DRX cycle and if a short DRX cycle is configured together for a terminal, a corresponding terminal may enter a short DRX cycle mode immediately after receiving a DRX command MAC CE. In addition, when a base station indicates a long DRX command MAC CE, a terminal may operate in a long DRX cycle mode even when a short DRX cycle is configured.

Additionally, a base station may adjust the start point of a long DRX cycle through an RRC parameter drx-LongCycleStartOffset. Here, a corresponding offset value may be defined so that a long DRX cycle may start at a slot boundary in the unit of an ms. In addition, a base station may configure the start point of an ON duration with slot level granularity through another RRC parameter drx-SlotOffset. In this case, the start point of an ON duration may be defined as the relative location of an ON duration by applying a slot offset indicated from a reference point indicated by Long-CycleStartOffset. A base station may adjust the locations of the start point of a DRX cycle and the start point of an ON duration through the above-described parameters to align the ON and OFF durations of a plurality of terminals within a cell and utilize them for an energy saving operation. However, to save energy through a base station's dynamic transmission/reception OFF time pattern, a more dynamic offset value indication may be required.

A terminal may wake up only during an ON duration through the above-described C-DRX configuration and monitor whether there is a PDCCH transmitted to itself, thereby saving energy compared to continuously monitoring a PDCCH (e.g., every slot). If a terminal has no data to be transmitted in a subsequent ON duration, a base station may transmit a WUS before the ON duration of a terminal starts to indicate that there is no need to wake up in an ON duration (e.g., there is no need to start an ON duration timer). It may save the battery/energy of a terminal. With respect to a WUS, a base station may transmit a WUS that may be transmitted to DCI format 2_6 at a WUS occasion configured before a corresponding ON duration when there is no data to be transmitted or received in a subsequent ON duration among the terminals for which C-DRX is configured and based on this, it may be indicated that a terminal has no need to wake up in a corresponding ON duration. A terminal receiving a corresponding WUS indication may continuously maintain a sleep mode/state without switching to an active mode, thereby increasing energy saving.

A cell DTX/DRX operation in the proposed methods of the present disclosure may have a structure similar to the C-DRX operation of a terminal described above. Specifically, a cell DTX/DRX operation may consist of an active period during which all signals and/or channels are transmitted and received without any restriction and a non-active period during which the transmission and reception of all signals and/or channels are turned off or only the transmission and reception of a specific signal and/or channel is performed in a limited manner.

In this regard, during an active period, the transmission and reception of all signals and/or channels may be performed without any special transmission and reception restriction, similar to the normal operation of a base station. A time period other than an active period may be basically considered as a non-active period. In a time period other than an active period, transmission and reception may be limited other than a pre-configured signal and channel and an operation that performs only minimal transmission and reception may be performed. For example, in a time period other than an active period, only PDCCH transmission or reception of an RACH/an SR/a PUCCH may be allowed. Through this, a base station may obtain an energy saving gain and also determine/recognize an operation when an NES state/mode is turned ON.

Specifically, a cell DTX/DRX configuration may be configured and activated through RRC signaling/messages. Alternatively, among the cell DTX/DRX configurations, some parameter(s) may be configured through RRC signaling/-message and the remaining parameter(s) may be configured/indicated and activated through L1/L2 signaling (e.g., (group-common) DCI/MAC-CE).

Information for the location and length of the active period and non-active period of cell DTX/DRX may be configured in advance through specific RRC parameter(s). For example, for an active period, a start point may be configured through an offset compared to a specific subframe boundary or a specific SFN value and a duration (i.e., a length) may be configured through a parameter and/or a timer, etc. related to a length. In this case, a method for configuring a plurality of parameters or timer candidates in advance and indicating one of the candidates during activation through L1/L2 signaling may also be possible.

In relation to the proposed methods of the present disclosure described below, a (UE-dedicated) RRC message may include an RRC reconfiguration message or an RAN area update message, etc. In addition, a UE-dedicated NAS message may include a tracking area update message or a registration or attach message, etc.

Hereinafter, various methods for performing the energy saving of a base station and/or a terminal by considering the above-described NES operation, i.e., cell DTX/DRX operation, are described.

For clarity of explanation, the proposed methods of the present disclosure are just described by distinguishing between embodiments, and a case in which some elements of one embodiment are substituted with or merged/combined with some elements of another embodiment and applied is also included in the scope of the present disclosure.

Embodiment 1

This embodiment relates to a method for performing cell DTX/DRX activation/deactivation through system information or paging DCI/message (or MAC-CE).

Specifically, to configure cell DTX/DRX configuration candidate(s) to be used in the RRC idle/inactive mode of a terminal and activate one of them through system information or paging DCI/message, at least one of the following methods may be used/applied.

(Method 1-1)

A base station may include a single cell DTX/DRX configuration or a plurality of cell DTX/DRX configuration candidates in a master information block (MIB) or a system information block (SIB) and activate/deactivate a single cell DTX/DRX configuration or a specific cell DTX/DRX configuration candidate for specific cells(s). In this case, a single cell DTX/DRX configuration may be commonly activated/deactivated for one or a plurality of cells.

For example, the MIB or SIB of the first cell may be broadcast by including a single cell DTX/DRX configuration or a plurality of cell DTX/DRX configuration candidates and the first cell or the second cell may activate/deactivate a corresponding single cell DTX/DRX configuration. Alternatively, in this case, the first cell or the second cell may activate/deactivate one or a part of one or more specific cell DTX/DRX configuration candidates. In this case, a single cell DTX/DRX configuration or a specific cell DTX/DRX configuration candidate may activate/deactivate the cell DTX/DRX configuration of the first cell, the second cell or the third cell.

In this regard, when a single cell DTX/DRX configuration is activated or a single cell DTX/DRX configuration candidate is activated, a terminal may perform a corresponding operation by configuring cell DTX/DRX based on an activated single cell DTX/DRX configuration or single cell DTX/DRX configuration candidate. When a plurality of cell DTX/DRX configuration candidates are activated, a base station may indicate one of a plurality of cell DTX/DRX configuration candidates through an SIB, a Ue-dedicated signal, DCI and/or an MAC-CE and a terminal may perform a corresponding operation by configuring cell DTX/DRX based on an indicated cell DTX/DRX configuration candidate. In this case, DCI may be paging-related DCI, group-common DCI or UE-specific DCI.

Additionally, when only one cell DTX/DRX configuration is included in an MIB or an SIB, a base station may be indicated to activate/deactivate a corresponding cell DTX/DRX configuration through an SIB, a UE-dedicated signal, DCI and/or an MAC-CE. In this case, DCI may be paging-related DCI, group-common DCI or UE-specific DCI.

(Method 1-2)

A base station may broadcast/transmit a single cell DTX/DRX configuration or one or more cell DTX/DRX configuration candidates through paging-related DCI or a paging message.

In this regard, a base station may broadcast a single cell DTX/DRX configuration or N cell DTX/DRX configuration candidates through an SIB and activate/deactivate a corresponding single cell DTX/DRX configuration or activate/deactivate one or more specific cell DTX/DRX configuration candidates among the N cell DTX/DRX configuration candidates through paging.

The above-described paging-related DCI may be DCI scheduling a paging early indication (PEI) or a paging message. In this case, a cell DTX/DRX configuration candidate may be activated/deactivated by using a short message or a reserved bit included in corresponding DCI.

For example, when N is 8, a short message or a reserved bit may indicate a 3-bit index value for a specific candidate among the 8 cell DTX/DRX configuration candidates broadcast through an SIB and indicate the activation/-deactivation of an index indicated by an additional 1-bit. For another example, when N is 3, a short message or a reserved bit may indicate bitmap information and indicate the activation/deactivation of each cell DTX/DRX configuration candidate in ascending order or descending order of 3-bit values of corresponding bitmap information, respectively. In addition, when only one cell DTX/DRX configuration is indicated, whether to activate/deactivate one cell DTX/DRX configuration broadcast through an SIB may be indicated through 1 bit within DCI.

Embodiment 2

This embodiment relates to a method for performing cell DTX/DRX activation/deactivation through an RRC connection message, an RRC release message or an RRC release message with a suspension configuration (e.g., SuspendConfig).

When the RRC mode/state of a terminal transitions, information for whether to maintain or change/expire a cell DTX/DRX configuration applied in a specific RRC mode/state may be configured/indicated through an RRC connection message or an RRC release message. If there is no separate configuration/indication, the existing configuration may be maintained.

Specifically, when transitioning from an RRC connected state to an RRC idle state or an RRC inactive state, a terminal may perform an operation based on one or more of the methods described below. In this case, a terminal that receives an RRC release message in an RRC connected state may transition to an RRC idle state when an RRC release message includes a suspension configuration (e.g., SuspendConfig) and may transition to an RRC inactive state when an RRC release message does not include a suspension configuration.

(Method 2-1)

If an RRC release message indicates the activation of a new cell DTX/DRX configuration or includes cell DTX/DRX configuration candidate(s), a terminal may activate an indicated cell DTX/DRX configuration or apply an included cell DTX/DRX configuration from one of the time points described below.

- Time Point 1. Immediately after a terminal receives a PDSCH including an RRC release message
- Time Point 2. Immediately after a terminal transmits HARQ-ACK information for a PDSCH including an RRC release message
- Time Point 3. Immediately after a certain time after a terminal receives a PDSCH including an RRC release message
- Time Point 4. Immediately after a certain time after a terminal transmits HARQ-ACK information for a PDSCH including an RRC release message
- Time Point 5. Immediately after or immediately after a certain time after a terminal transmits RLC ACK information for an RLU PDU including an RRC release message
- Time Point 6. A time point when a terminal transitions to an RRC idle state or an RRC inactive state

(Method 2-2)

If an RRC release message does not indicate the activation/deactivation of a cell DTX/DRX configuration and also does not include cell DTX/DRX configuration candidate(s), a terminal may maintain a cell DTX/DRX configuration that is currently activated and applied even in an RRC idle/inactive state.

(Method 2-3)

If an RRC release message does not indicate the activation/deactivation of a cell DTX/DRX configuration and also does not include cell DTX/DRX configuration candidate(s), a terminal may deactivate and release a cell DTX/DRX configuration that is currently activated and applied.

(Method 2-4)

If an RRC release message indicates the maintenance of a cell DTX/DRX configuration that is currently activated and applied, a terminal may maintain a cell DTX/DRX configuration that is currently activated and applied in an RRC idle/inactive state. On the other hand, if an RRC release message does not indicate the maintenance of a cell DTX/DRX configuration that is currently activated and applied, a terminal may deactivate and release a cell DTX/DRX configuration that is currently activated and applied.

(Method 2-5)

If an RRC release message indicates the deactivation/release of a cell DTX/DRX configuration that is currently activated and applied, a terminal may deactivate and release a cell DTX/DRX configuration that is currently activated and applied. If an RRC release message does not indicate the deactivation/release of a cell DTX/DRX configuration that is currently activated and applied, a terminal may maintain a cell DTX/DRX configuration that is currently activated and applied even in an RRC idle/inactive state.

(Method 2-6)

When a cell DTX/DRX configuration that is currently activated and applied is deactivated and released or when an RRC release message does not include a cell DTX/DRX configuration, a terminal may receive a cell DTX/DRX configuration through system information. Thereafter, a corresponding terminal may immediately apply a received cell DTX/DRX configuration or apply a received cell DTX/DRX configuration from the start point of the next BCCH modification period.

(Method 2-7)

If an RRC release message or system information includes one or a plurality of cell DTX/DRX configuration candidates or receives and stores one or a plurality of cell DTX/DRX configuration candidates in an RRC connected state, paging-related DCI, a paging message, group common DCI or a group common MAC-CE may indicate the activation/deactivation of one of the corresponding configuration candidate(s). Based on this, a terminal may receive and store a plurality of cell DTX/DRX configuration candidates through a UE-dedicated RRC/NAS message, an RRC release message or system information. A corresponding terminal may activate one of these candidates or deactivate all of them and activate/deactivate one of these candidates by receiving paging-related DCI, a paging message, group common DCI or a group common MAC-CE.

In this embodiment, one or a plurality of the above-described methods may be applied both when switching to an RRC idle/inactive state, may be applied only when switching to an RRC inactive state and may not be applied when switching to an RRC idle state, or may be applied only when switching to an RRC idle state and may not be applied when switching to an RRC inactive state. For example, a specific method may be applied only when switching to an RRC inactive state and may not be applied when switching to an RRC idle state, and another method may be applied only when switching to an RRC idle state and may not be applied when switching to an RRC inactive state.

Additionally, in this embodiment, when a terminal performs a cell selection/reselection process, one or a plurality of the methods described above may be applied only when a specific cell is selected and may not be applied when a cell other than a specific cell is selected. In this case, a specific cell may be included in a cell list or a cell group indicated by a base station through an RRC release message, a UE-dedicated RRC/NAS message or system information. Alternatively, a specific cell may be a cell broadcasting system information related to a cell DTX/DRX configuration or a cell from which a terminal receives an RRC release message or a UE-dedicated RRC/NAS message.

Embodiment 3

This embodiment relates to a method for transmitting and receiving a signal and/or a channel for a terminal in an idle/inactive state by considering the non-active period of cell DTX/DRX.

First, a method for turning off all or a part of the RNTIs monitored by a terminal in an RRC idle/inactive mode may be as follows.

Specifically, a terminal in an RRC idle state or an RRC inactive state may receive DCI which is CRC-scrambled with the first RNTI and may not receive DCI which is CRC-scrambled with the second RNTI during the non-active period of cell DTX/DRX according to the configuration of a base station.

As an example, the first RNTI may be a P-RNTI and/or a PEI-RNTI and the second RNTI may be an SI-RNTI and/or a C-RNTI.

As another example, the first RNTI may be a P-RNTI and/or a PEI-RNTI received at a UE-specific paging occasion and the second RNTI may be an RNTI other than it.

As another example, for a terminal in an RRC idle state or an RRC inactive state, a C-RNTI for small data transmission (SDT) transmission and reception may be configured as the first RNTI or the second RNTI according to the configuration of a base station.

As another example, for a terminal in an RRC idle state or an RRC inactive state, a terminal may configure a C-RNTI received during an RACH process for initial access as the first RNTI. Alternatively, a corresponding C-RNTI may be configured as the first RNTI or the second RNTI according to the configuration of a base station.

A terminal in an RRC idle state or an RRC inactive state may not transmit a PUSCH for the first terminal ID and may transmit a PUSCH for the second terminal ID during the non-active period of cell DTX/DRX according to the configuration of a base station. As an example, the first terminal ID may be an I-RNTI and the second terminal ID may be an s-TMSI. As another example, the first terminal ID may be an s-TMSI and the second terminal ID may be an I-RNTI. As another example, the first terminal ID may be a C-RNTI and the second terminal ID may be an s-TMSI.

Next, a method for turning off UL or DL transmission and reception according to the RRC state of a terminal may be as follows.

For example, a terminal in an RRC idle state or an RRC inactive state may perform UL transmission during the non-active period of cell DTX/DRX according to the configuration of a base station. On the other hand, a terminal in an RRC connected state may not perform UL transmission during the non-active period of cell DTX/DRX according to the configuration of a base station.

Alternatively, a terminal in an RRC idle state or an RRC inactive state may not perform UL transmission during the non-active period of cell DTX/DRX according to the configuration of a base station. On the other hand, a terminal in an RRC connected state may perform UL transmission during the non-active period of cell DTX/DRX according to the configuration of a base station.

Alternatively, a terminal in an RRC idle state may perform UL transmission during the non-active period of cell DTX/DRX according to the configuration of a base station. On the other hand, a terminal in an RRC inactive state may not perform UL transmission during the non-active period of cell DTX/DRX according to the configuration of a base station.

Alternatively, a terminal in an RRC inactive state may not perform UL transmission during the non-active period of cell DTX/DRX according to the configuration of a base station. On the other hand, a terminal in an RRC idle state may perform UL transmission during the non-active period of cell DTX/DRX according to the configuration of a base station.

Alternatively, a terminal in an RRC idle state or an RRC inactive state may receive DL transmission during the non-active period of cell DTX/DRX according to the configuration of a base station. On the other hand, a terminal in an RRC connected state may not receive DL transmission during the non-active period of cell DTX/DRX according to the configuration of a base station.

Alternatively, a terminal in an RRC idle state or an RRC inactive state may not receive DL transmission during the non-active period of cell DTX/DRX according to the configuration of a base station. On the other hand, a terminal in an RRC connected state may receive DL transmission during the non-active period of cell DTX/DRX according to the configuration of a base station.

Alternatively, a terminal in an RRC idle state may receive DL transmission during the non-active period of cell DTX/DRX according to the configuration of a base station. On the other hand, a terminal in an RRC inactive state may not receive DL transmission during the non-active period of cell DTX/DRX according to the configuration of a base station.

Alternatively, a terminal in an RRC inactive state may not receive DL transmission during the non-active period of cell DTX/DRX according to the configuration of a base station. On the other hand, a terminal in an RRC idle state may receive DL transmission during the non-active period of cell DTX/DRX according to the configuration of a base station.

In the above-described methods, a configuration by a base station may be configured/indicated through a UE-dedicated RRC/NAS message or system information, etc.

Embodiment 4

This embodiment relates to a method for turning off all or a part of a PRS/a TRS/an SRS (for positioning) (per index/configuration).

First, for a PRS, a method for turning it off based on a TRP may be appropriate. In this case, for a neighbor cell, an additional indication for a cell DTX/DRX pattern may be required.

For example, when a specific PRS or TRS resource overlaps with the non-active period of the cell DTX/DRX of a serving cell or when a TRP associated with a specific PRS or TRS resource is turned off due to an NES-related operation, a terminal may determine that a corresponding PRS or TRS resource is not transmitted.

Additionally or alternatively, when it is determined that a specific PRS or TRS resource overlaps with a non-active period or an OFF duration based on the DTX/DRX pattern of a neighbor cell, a terminal may determine that a corresponding PRS or TRS resource is not transmitted. In this case, a corresponding DTX/DRX pattern may be configured per frequency, may be configured per band or may be configured per neighbor cell list. Here, a DTX/DRX pattern may include information for a non-active period or an OFF duration.

Next, an SRS may be associated with spatial relation information or a reference signal for power control.

For example, when a reference signal connected to an SRS resource exists in the non-active period of cell DTX/DRX or is turned off due to an NES-related operation, a terminal may also not transmit a corresponding SRS resource. In this case, a connected reference signal may be configured as the reference signal of spatial relation information included in an SRS configuration (e.g., an SSB or a CSI-RS, etc.), a pathloss reference signal or a CSI-RS resource.

Embodiment 5

This embodiment relates to a method for performing neighbor/serving cell measurement and cell (re)selection by considering cell DTX/DRX.

A terminal may perform measurement on a neighbor cell according to a cell DTX/DRX pattern.

In this regard, a base station may configure a cell DTX/DRX pattern for measurement on a neighbor cell. In this case, a cell DTX/DRX pattern may be configured to be applied only to specific measurement object(s) or to be applied only to specific object(s) excluding specific measurement object(s). As an example, a specific measurement object may refer to specific neighbor cell(s) or a specific frequency, etc. In other words, a terminal may perform restricted measurement on a neighbor cell/a frequency based on a cell DTX/DRX pattern configured by a base station.

Additionally or alternatively, a terminal may perform measurement on a neighbor cell in the non-active period of cell DTX/DRX.

In this regard, in the non-active period of the cell DTX/DRX of a serving cell, a terminal may be configured to perform measurement only on designated specific SSB index(es) or designated specific CSI-RS resource(s). Alternatively, in the non-active period of the cell DTX/DRX of a serving cell, a terminal may be configured to perform measurement only on specific measurement object(s) designated by a base station or measurement object(s) excluding specific measurement object(s). As an example, a specific measurement object may refer to specific neighbor cell(s) or a specific frequency, etc.

Additionally or alternatively, a terminal may not perform measurement on a serving cell in the non-active period of cell DTX/DRX or may perform restricted measurement.

In this regard, when restricted measurement is performed, a terminal may be configured to perform measurement only on specific SSB index(es) or designated specific CSI-RS resource(s). And/or, when restricted measurement is performed, a terminal may be configured to perform measurement only in a specific time period pre-defmed or pre-configured by a base station, etc. And/or, when restricted measurement is performed, a terminal may be configured to perform measurement for each longer time periodicity. And/or, a terminal may not perform measurement on a serving cell in the non-active period of cell DTX/DRX or may perform restricted measurement only when the measurement value of a serving cell is greater than or equal to a certain level (e.g., a threshold). And/or, a terminal may perform restricted measurement or general measurement in the non-active period of cell DTX/DRX only when the measurement value of a serving cell is less than or equal to a certain level (e.g., a threshold).

Embodiment 6

This embodiment relates to a method for activating/deactivating a cell DTX/DRX configuration when switching from an RRC idle state or an RRC inactive state to an RRC connected state.

Specifically, when switching from an RRC idle state or an RRC inactive state to an RRC connected state, a terminal may activate/deactivate a cell DTX/DRX configuration based on one or more of the methods described below.

(Method 6-1)

When a terminal in an RRC idle state or an RRC inactive state activates and applies a cell DTX/DRX configuration or when a terminal in an RRC idle state or an RRC inactive state deactivates or does not apply a cell DTX/DRX configuration, a terminal may perform an RACH to receive an RRC setup message or an RRC resume message and switch to an RRC connected state to activate and apply a new cell DTX/DRX configuration as described below.

For example, one or a plurality of cell DTX/DRX configuration candidates may be provided to a terminal and the activation/deactivation of a specific cell DTX/DRX configuration candidate may be indicated through an RACH message 2 (RACH MSG2) MAC-CE, an RACH message 4 (RACH MSG4) MAC-CE, an RRC setup message, an RRC reconfiguration message, DCI scheduling an RACH MSG2 MAC-CE, DCI scheduling an RACH MSG4 MAC-CE or DCI scheduling an RRC setup message. In this case, a terminal may apply a provided new cell DTX/DRX configuration candidate or apply an activation/deactivation indication immediately after receiving or immediately after a certain time after receiving a corresponding message, MAC-CE or DCI or immediately after transmitting or immediately after a certain time after transmitting HARQ-ACK for this. In this case, a terminal may release all cell DTX/DRX configurations applied in an RRC idle state or an RRC inactive state.

(Method 6-2)

When a terminal in an RRC idle state or an RRC inactive state activates and applies a cell DTX/DRX configuration, a terminal may perform an RACH to receive an RRC setup message and switch to an RRC connected state. In this case, a terminal in an RRC idle state or an RRC inactive state may store one or a plurality of cell DTX/DRX configuration candidates received through an RRC release message and may report to a base station whether they are stored during an RACH process or after an RACH success. For example, a terminal may report to a base station that it is storing one or a plurality of cell DTX/DRX configuration candidates through the specific preamble ID of RACH message 1 (RACH MSG1), a specific RACH occasion/resource, the specific DMRS of RACH message 3 (RACH MSG3), a specific LCID value, RACH message 5 (RACH MSG5 (e.g., an RRC setup complete message, an RRC resume complete message), an RRC reconfiguration complete message and UE assistance information.

In this regard, a base station may provide one or a plurality of new cell DTX/DRX configuration candidates to a terminal and indicate the activation/deactivation of a specific cell DTX/DRX configuration candidate through an RACH MSG2 MAC-CE, an RACH MSG4 MAC-CE, an RRC setup message, an RRC reconfiguration message, DCI scheduling an RACH MSG2 MAC-CE, DCI scheduling an RACH MSG4 MAC-CE or DCI scheduling an RRC setup message according to or even without a terminal's report. In this case, a terminal may delete previously stored cell DTX/DRX configuration candidate(s) and store and apply newly received cell DTX/DRX configuration candidate(s). In this case, a terminal may apply a provided new cell DTX/DRX configuration candidate or apply an activation/deactivation indication immediately after receiving or immediately after a certain time after receiving a corresponding message, MAC-CE or DCI or immediately after transmitting or immediately after a certain time after transmitting HARQ-ACK for this. In this case, a terminal may release all cell DTX/DRX configurations applied in an RRC idle state or an RRC inactive state.

Alternatively, a base station may instruct a terminal to maintain the existing information in an RRC connected state through an RACH MSG2 MAC-CE, an RACH MSG4 MAC-CE, an RRC setup message, an RRC reconfiguration message, DCI scheduling an RACH MSG2 MAC-CE, DCI scheduling an RACH MSG4 MAC-CE or DCI scheduling an RRC setup message according to or even without a terminal's report. In this case, a terminal may maintain all cell DTX/DRX configurations stored in an RRC idle state or an RRC inactive state and activate/deactivate specific cell DTX/DRX configuration candidate(s) according to an RRC/NAS message, an MAC-CE or DCI received in an RRC connected state.

Alternatively, when a base station does not perform a separate indication during an RACH process or immediately after an RACH, a terminal may maintain all cell DTX/DRX configurations stored in an RRC idle state or an RRC inactive state. In addition, a corresponding terminal may activate/deactivate specific cell DTX/DRX configuration candidate(s) according to an RRC/NAS message, an MAC-CE or DCI received in an RRC connected state.

Alternatively, when a base station does not perform a separate indication during an RACH process or immediately after an RACH, a terminal may release all cell DTX/DRX configurations stored in an RRC idle state or an RRC inactive state and deactivate or remove cell DTX/DRX configuration candidate(s).

Alternatively, a base station may instruct a terminal to deactivate or remove the existing information through an RACH MSG2 MAC-CE, an RACH MSG4 MAC-CE, an RRC setup message, an RRC reconfiguration message, DCI scheduling an RACH MSG2 MAC-CE, DCI scheduling an RACH MSG4 MAC-CE or DCI scheduling an RRC setup message according to or even without a terminal's report. Based on this, a terminal may deactivate previously activated specific cell DTX/DRX configuration(s) and remove all previously stored cell DTX/DRX configurations.

(Method 6-3)

One or a plurality of cell DTX/DRX configuration candidates may be provided to a terminal and the activation/- deactivation of a specific cell DTX/DRX configuration candidate may be indicated through an RACH MSG2 MAC-CE, an RACH MSG4 MAC-CE, an RRC setup message, an RRC reconfiguration message, DCI scheduling an RACH MSG2 MAC-CE, DCI scheduling an RACH MSG4 MAC-CE or DCI scheduling an RRC setup message. In this case, a terminal may apply a provided new cell DTX/DRX configuration candidate or apply an activation/deactivation indication immediately after receiving or immediately after a certain time after receiving a corresponding message, MAC-CE or DCI or immediately after transmitting or immediately after a certain time after transmitting HARQ-ACK for this.

Embodiment 7

This embodiment relates to a method for turning off all or a part of PRACH resources regarding the non-active period of cell DTX/DRX.

In this regard, a corresponding RACH may be for an on-demand system information (SI) request, an RRC connection request or an RRC resume request, etc. Based on the above-described OFF operation, a specific RACH process may be suspended or may not be triggered.

Specifically, when an RACH for random access based SDT (RA-SDT), an RACH for an SI request, an RACH for initial access, an RACH for an SR or an RACH for beam failure recovery is configured, a base station may configure only all RACH resources, a specific SSB index among the RACH resources, a specific access slot or a specific RACH occasion (RO) as a resource that may not be transmitted or a resource that may be transmitted during the non-active period of cell DTX/DRX.

A base station may configure an RACH as a non-transmittable resource or a transmittable resource for each specific SSB index, specific access slot, specific UL BWP or specific RO for all RRC states or all terminals in a specific RRC state through an RRC release message, a UE-dedicated RRC/NAS message, system information, DCI or an MAC-CE. In this case, a non-transmittable RACH resource or a transmittable RACH resource may be configured to be applied only to RACH message 1 (RACH MSG1) and/or RACH message A (RACH MSGA). A specific RRC state may be an RRC idle state, an RRC inactive state and/or an RRC connected state.

Additionally, when it is configured not to be transmitted during the non-active period of cell DTX/DRX for a specific SSB index, a specific access slot, a specific UL BWP or a specific RO, a terminal may invalidate an RACH preamble and/or an RACH occasion resource for a corresponding SSB index.

Additionally, a specific RO may be based on a specific RACH configuration or a specific RO index. In addition, a specific UL BWP may be a previous version of an UL BWP (e.g., an Rel-15 UL BWP), a UL BWP for RedCap or a BWP for SDT.

The above-described non-transmittable resource or transmittable resource may or may not be configured for each RACH cause. For example, only for an RACH for RA-SDT, an RACH for an SI request, an RACH for initial access, an RACH for SR or an RACH for beam failure recovery, a resource that may not be transmitted or a resource that may be transmitted during the non-active period of cell DTX/DRX may be configured.

For an RACH for initial access, a non-transmittable resource or a transmittable resource may be configured to be non-transmittable or transmittable during the non-active period of cell DTX/DRX only for an RACH for initial access for (or excluding) a specific establishment cause (according to the configuration of a base station). In this regard, a specific establishment cause may be one of MO access, MT access, emergency access or high priority access or may be an RACH for an RRC connection request or resume request excluding these.

Additionally or alternatively, for an RACH for initial access, a non-transmittable resource or a transmittable resource may be configured to be non-transmittable or transmittable during the non-active period of cell DTX/DRX only for the RACH of an RRC idle terminal or the RACH of an RRC inactive terminal (according to the configuration of a base station).

For an RACH for an SI request, it may be configured to be non-transmittable or transmittable during the non-active period of cell DTX/DRX only for an RACH for an on-demand SI request for (or excluding) a specific SIB type or a specific SI message. In this regard, when an RACH for an on-demand SI request for a specific SIB type or a specific SI message may not be transmitted during the non-active period of cell DTX/DRX, a terminal may suspend/stop or may not trigger a corresponding RACH.

For an RACH for RA-SDT, an RACH for initial access or an RACH for SR, when an RACH is triggered due to the data transmission of a specific radio bearer or data transmission excluding the data transmission of a specific radio bearer, an RACH for (or excluding) a corresponding specific radio bearer may be configured to be non-transmittable or transmittable during the non-active period of cell DTX/DRX. Alternatively, an RACH for RA-SDT, an RACH for initial access or an RACH for SR for (or excluding) a specific radio bearer may not be triggered or may be suspended/stopped.

Embodiment 8

This embodiment relates to a method for performing RACH backoff and RRC timer operations during an RACH process by considering the non-active period of cell DTX/DRX.

When an RACH is triggered, a terminal may transmit RACH message 2 (RACH MSG1), RACH message 3 (RACH MSG3) and RACH message A (RACH MSGA). In this case, when there is no RA response from a base station or when contention resolution fails, a terminal may apply backoff by X ms according to a backoff indication indicating X ms and then retransmit RACH MSG1 or RACH MSGA.

In this regard, the first time point for starting backoff application, the second time point for retransmitting RACH MSG1 or RACH MSGA or a period between the first time point and the second time point may be included in or overlap with the non-active period of the cell DTX/DRX. In this case, a terminal may extend backoff to X+k ms, apply backoff by X ms by excluding the non-active period of cell DTX/DRX or apply backoff by X ms immediately after the non-active period of cell DTX/DRX and then retransmit RACH MSG1 or RACH MSGA.

Additionally or alternatively, when an RACH is triggered by an RRC layer for a specific RRC procedure, a terminal may start a related RRC timer according to an RACH trigger. Thereafter, when an RACH procedure is not successfully terminated because a related RRC timer expires until a designated timer value, a terminal may consider a corresponding RRC procedure to have failed.

For this operation, according to the configuration of a base station, a terminal may differently configure and apply a designated timer value when cell DTX/DRX is configured/activated (i.e., the first timer value) and a designated timer value when cell DTX/DRX is not configured or deactivated (i.e., the second timer value). Alternatively, when a timer expires during the non-active period of cell DTX/DRX, a terminal may expire a corresponding timer immediately after the end of a non-active period, extend a timer value by k ms from the time point of expiration, extend a timer value by k ms immediately after the end of a non-active period or apply the second timer value.

Regarding the above-described embodiments of the present disclosure, the field of group common DCI for activating/deactivating a cell DTX/DRX configuration may be configured in a UE-specific manner or in a UE-common manner.

In this regard, since a cell DTX configuration and a cell DRX configuration may be configured individually, a field indicating the activation/deactivation of a cell DTX configuration and a field indicating the activation/deactivation of a cell DRX configuration may be separately required.

In addition, a plurality of cell DTX/DRX configurations may be configured for cell DTX/DRX (e.g., index#1 = cell DTX configuration #1, index#2 = cell DTX configuration #2, index#3 = cell DRX configuration #3, index#4 = configuration #4 in which cell DTX and cell DRX are jointed), and a timer (or a period) in which each cell DTX/DRX configuration maintains (de)activation may be configured for each cell within a corresponding configuration. Accordingly, a DTX (de) activation indication/DRX (de)activation indication/timer or a (valid) period/cell DTX/DRX configuration index field may be configured as a single block. In addition, a corresponding block may be mapped to each cell/cell group configured for a terminal and multiple blocks with a corresponding field may be configured within group common DCI (GC-DCI).

In this case, the number of serving cells configured for each terminal may be different and a cell DTX configuration and a cell DRX configuration may also be configured for each cell, so only a DTX configuration may exist or only a DRX configuration may exist for each cell. Accordingly, the size of each block configuring GC-DCI may be different for each terminal and even when a plurality of timers and cell DTX/DRX configurations are configured, the size of a block may be different. Alternatively, conversely, the number of bits configuring a block for each cell may be configured constantly (e.g., to match the maximum size), but a corresponding indication may be interpreted by utilizing all bits within a block or may also be interpreted by ignoring some bits according to a configuration for each cell or each terminal. In addition, whether a specific bit within a block is ignored and interpreted may be different according to whether a timer is set or the cell DTX/DRX inactive state of a specific cell/cell group. As an example, when the cell DTX/DRX deactivation of a specific cell/cell group is indicated, a specific field (e.g., a field indicating a timer or a cell DTX/DRX configuration index) may be omitted or may be ignored and interpreted even if it exists within a block.

For example, DCI format 2_6 may be scrambled with an PS-RNTI and the start position of a block allocated to each terminal may be determined by a ps-PositionDCI-2-6 parameter. A block for each terminal may consist of a wake-up indication field and an Scell dormancy indication field. When a wake-up indication consisting of 1 bit is 0, a terminal may not start the drx-onDurationTimer of the next long DRX cycle and when it is 1, a terminal may start a corresponding timer. For an Scell dormancy indication field, the size of a bitmap may be determined according to a DormancyGroupID configuration. In addition, DCI format 2_6 may be transmitted only outside of a terminal's activation time (i.e., received on a terminal side) and its size may be determined by sizeDCI-2-6.

In the present disclosure, when a new DCI format for (de)activating the above-described cell DTX/DRX configuration is referred to as DCI format 2_X, a method for configuring DCI by merging information for DCI format 2_X with the existing DCI format 2_6 may be considered to avoid increasing the DCI size budget or the number of required blind decoding (BD) of a terminal.

In this case, considering backward compatibility with a legacy terminal, it may be configured by attaching the information of DCI format 2_X to the back of DCI format 2_6 or may be interpreted by adding the block position of DCI format 2_X to the ps-Offset value of DCI format 2_6. In the former case, a terminal may consider and interpret the last block to latter part of DCI format 2_6 are composed of block(s) for activating/deactivating a cell DTX/DRX configuration. In the latter case, a terminal may also know the start position of a block by adding the block position offset value of DCI format 2_X to a ps-Offset value indicating the start position of a block within DCI format 2_6.

Alternatively, without considering a legacy terminal, DCI format 2_X may be configured differently for each cell/cell group, and information of DCI format 2_6 may be configured as a separate offset parameter to indicate the position of a block including a wake-up indication field and an Scell dormancy indication field.

As described above, when DCI may be configured by merging information of DCI format 2_X with the existing DCI format 2_6, DCI format 2_6 may configure a monitoring occasion (MO) only at the external DRX active time of a terminal's C-DRX, but DCI format 2_X may configure an MO regardless of internal/external. Accordingly, the MO of DCI format 2_X is additionally configured for the MO of DCI format 2_6, and in this case, a DCI format in which DCI format 2_6 and DCI format 2_X are combined may also be transmitted at the MO of DCI format 2_6.

As another method, a terminal configured with a search space (SS) set or an MO for two DCI formats, i.e., DCI format 2_6 and DCI format 2_X, may be configured/indicated to detect all of the two corresponding DCI formats where two MOs overlap or if two MOs overlap, to receive them in a time-division multiplexing (TDM) way by shifting one of the two MOs so that they do not overlap.

For DCI format 2_6, a corresponding DCI format is not always transmitted at a configured MO, so only one DCI format of DCI format 2_6 or DCI format 2_X may be transmitted at the MO of DCI format 2_6. In addition, a default operation when each of DCI format 2_X and DCI format 2_6 is not received (or detected) may be configured and defined in advance (a standard, etc.). For example, when DCI format 2_6 is not received, not starting the drx-onDurationTimer of the next long DRX cycle may be configured as a default operation. In this case, when DCI format 2_X is not received, the activated cell DTX/DRX configuration of each cell may be configured/defined to be maintained as is.

If DCI format 2_X transmitted at the MO of DCI format 2_6 is transmitted by including the information of DCI format 2_6, it may be configured for each block within new DCI format 2_X or by separately including a wake-up indication field block. In this case, an Scell dormancy indication field may be excluded or a pre-promised/configured operation may be performed. In addition, during the non-active period of cell DTX, PDCCH transmission may be turned off according to a configuration. Accordingly, a base station may not transmit a PDCCH and a terminal may also not expect PDCCH reception and may not perform GC-DCI monitoring. However, in order to (de)activate a cell DTX/DRX configuration in a non-active period, new DCI format 2_X may be exceptionally allowed to perform PDCCH transmission and monitoring even in the non-active period of cell DTX described above (through a specific RNTI/SS configuration).

Additionally or alternatively, not only a method for configuring information within a block with individual bits, respectively, together with cell DTX activation/deactivation and cell DRX activation/deactivation indications and timer values for each block included in DCI format 2_6, but also a method for configuring multiple information by joint encoding it into one state is possible. For example, each block may consist of the following M states.

- State 0: Cell DTX/DRX Deactivation
- State 1: Cell DTX Pattern #1/Cell DRX Pattern #1 Activation and Timer A
- State 2: Cell DTX Pattern #2/Cell DRX Pattern #2 Activation and Timer B
  ...,
- State M-1: Cell DTX Pattern #N/Cell DRX Pattern #N Activation and Timer X

A joint encoding method described above may be applied to all information included within a block. As an example, when a total of four information is included within a block, corresponding four information may be joint-encoded and configured as a single state or only two information may be joint-encoded.

Additionally, when cell DTX/DRX activation/deactivation is indicated to a terminal, information for an actually applied start time point may be included in DCI and directly indicated. Corresponding information may be indicated for each block, may be indicated for each block group unit or may be commonly indicated for all blocks according to a configuration. For example, when a value K is indicated as an application time point through DCI, a terminal may start actual DTX/DRX activation/deactivation from a time point after K slots (or symbols) from a PDCCH reception time point (e.g., a slot in which a PDCCH is received or a PDCCH start/end symbol).

A PDCCH MO from which DCI Format 2_6 is transmitted may be configured with a monitoring window of a specific length in front by a specific offset from a cell DTX active period and/or a cell DTX non-active period, similar to the MinTimeGap of DCI format 2_6. In this case, an offset value and the length of a monitoring window may be configured in advance from a base station. When a monitoring window exists in front by a specific offset from a cell DTX active period, it may mean that since MOs may be included in the non-active period of cell DTX, DCI format 2_X is exceptionally allowed to be transmitted even when a base station is configured to turn off all PDCCH reception or turn off the transmission of a specific type (e.g., Type-3 CSS) of an SS in a non-active period when configuring cell DTX.

Embodiment 9

This embodiment relates to a method for configuring a HARQ-ACK codebook for an SPS PDSCH and transmitting and receiving it by considering an NES operation. In addition, this embodiment relates to a method for multiplexing a HARQ-ACK codebook for an SPS PDSCH and a HARQ-ACK codebook for a dynamic PDSCH (i.e., a PDSCH scheduled by DCI).

In this regard, it is necessary to define a reception operation of a semi-persistent scheduling (SPS)-based downlink data channel (e.g., SPS PDSCH) of a UE and/or a transmission operation of HARQ-ACK information thereof, in consideration of a power saving operation (NES) of the network node.

In the present disclosure, with respect to an operation of a UE connected to a network node supporting an NES operation, different first period and second period may be configured/determined according to one or a plurality of the following cases.

- Case 1. A first period operating in an NES mode and a second period operating in a non-NES mode
- Case 2. A first period being an inactive time of cell DTX and a second period being an active time of cell DTX (that is, the first period corresponds to a time period in which the network node does not perform transmission (TX) for a specific cell, and the second period corresponds to a time period in which the network node performs transmission (TX) for a specific cell)
- Case 3. A first period being an inactive time of UE DRX and a second period being an active time of UE DRX (that is, the first period corresponds to a time period in which the UE does not perform reception (RX), and the second period corresponds to a time period in which the UE performs reception (RX))
- Case 4. A first period being an inactive time of cell DRX and a second period being an active time of cell DRX (that is, the first period corresponds to a time period in which the network node does not perform reception (RX), and the second period corresponds to a time period in which the network node performs reception (RX))
- Case 5. A first period being an inactive time of UE DTX and a second period being an active time of UE DTX (that is, the first period corresponds to a time period in which the UE does not perform transmission (TX), and the second period corresponds to a time period in which the UE performs transmission (TX))

Based on configuration of the network node, only the second period may be set, or both the first period and the second period may be configured, for each of cell, BWP, frequency, RS for RLF (radio link failure) purpose, AP (antenna port), AP group, and/or antenna element group.

With respect to the aforementioned first period and second period, a time period other than the first period may correspond to the second period, and a time period other than the second period may correspond to the first period. Additionally, the network node may separately configured the first period and the second period for each of the aforementioned cases. In this case, for different cases, a specific time period may correspond to the first period or the second period. In consideration thereof, when a specific time period belongs only to the first period, the UE may perform the operation of the first period in the present disclosure, and when a specific time period belongs only to the second period, the UE may perform the operation of the second period in the present disclosure. Additionally or alternatively, when the first period and the second period overlap, the UE may perform only the operation of the first period in the present disclosure, or may preferentially perform the operation of the first period. Additionally or alternatively, when the first period and the second period overlap, the UE may perform only the operation of the second period in the present disclosure, or may preferentially perform the operation of the second period.

The present disclosure describes a method for configuring and transmitting and receiving an SPS PDSCH by a network node and a terminal and a HARQ-ACK codebook for this through specific examples based on the first period and the second period related to an NES.

Based on the embodiment(s) of the present disclosure, when one or more SPS configurations are set and activated, a UE that has received SPS PDSCH(s) for the activated SPS configuration(s) through one or more cells may transmit HARQ-ACK information for the SPS PDSCH(s) via PUCCH resource(s) based on the configuration. As an example, the corresponding PUCCH resource(s) may be determined according to an SPS-PUCCH-AN-List configuration or an n1PUCCH-AN configuration set for the UE.

In this regard, a terminal may determine whether or not to configure a HARQ-ACK codebook for an SPS PDSCH (i.e., a sub-codebook for an SPS PDSCH) based on one or more of the following methods and may operate to determine whether to transmit a corresponding PUCCH (or UCI).

(Method 9-1-1)

For a specific SPS configuration of a specific cell, HARQ-ACK bit(s) for a specific SPS PDSCH slot that is fully or partially within the first period (i.e., overlapping with the first period) may not be included in the HARQ-ACK codebook. Accordingly, the UE may construct the HARQ-ACK codebook for SPS to include HARQ-ACK bit(s) in the following examples, excluding the corresponding HARQ-ACK bit(s).

For example, for all other cells except the specific cell, the HARQ-ACK codebook may be configured to include HARQ-ACK bit(s) for SPS PDSCH slot(s) of all activated SPS configuration(s). Additionally, for the specific cell, HARQ-ACK bit(s) for SPS slot(s) of all activated SPS configurations except the specific SPS configuration may be included in the HARQ-ACK codebook. Furthermore, for the specific SPS configuration of the specific cell, the HARQ-ACK codebook may be constructed to include only HARQ-ACK bit(s) for SPS PDSCH slot(s) excluding specific SPS PDSCH slot(s) that are fully or partially within the first period.

The UE may transmit the HARQ-ACK codebook constructed as described above via PUCCH or PUSCH. In this case, if there are no HARQ-ACK bit(s) as in the above examples (i.e., HARQ-ACK bit(s) to be included in the HARQ-ACK codebook), the UE may not report HARQ-ACK information for the SPS.

(Method 9-1-2)

For a specific SPS configuration of a specific cell, HARQ-ACK bit(s) for a specific SPS PDSCH slot that is fully or partially within the first period (i.e., overlapping with the first period) may be indicated as NACK. That is, the corresponding HARQ-ACK bit(s) may be included in the HARQ-ACK codebook as NACK information.

(Method 9-1-3)

For a specific SPS configuration of a specific cell, if all SPS PDSCH slots are fully or partially within the first period (i.e., all SPS PDSCH slots overlap with the first period), the corresponding HARQ-ACK bit(s) may not be included in the HARQ-ACK codebook. Accordingly, the UE may construct the HARQ-ACK codebook for SPS to include HARQ-ACK bit(s) in the following examples, excluding the corresponding HARQ-ACK bit(s).

For example, for all other cells except the specific cell, the HARQ-ACK codebook may be constructed to include HARQ-ACK bit(s) for SPS PDSCH slot(s) of all activated SPS configuration(s). Additionally, for the specific cell, HARQ-ACK bit(s) for SPS slot(s) of all activated SPS configurations except the specific SPS configuration may be included in the HARQ-ACK codebook.

The UE may transmit the HARQ-ACK codebook constructed as described above via PUCCH or PUSCH. In this case, if there are no HARQ-ACK bit(s) as in the above examples (i.e., HARQ-ACK bit(s) to be included in the HARQ-ACK codebook), the UE may not report HARQ-ACK information for the SPS.

(Method 9-1-4)

For a specific SPS configuration of a specific cell, if all SPS PDSCH slots are fully or partially within the first period (i.e., all SPS PDSCH slots overlap with the first period), the corresponding HARQ-ACK bit(s) may not be included in the HARQ-ACK codebook. Accordingly, the UE may construct the HARQ-ACK codebook for SPS to include HARQ-ACK bit(s) in the following examples, excluding the corresponding HARQ-ACK bit(s).

For example, for all other cells except the specific cell, the HARQ-ACK codebook may be constructed to include HARQ-ACK bit(s) for SPS PDSCH slot(s) of all activated SPS configuration(s).

The UE may transmit the HARQ-ACK codebook constructed as described above via PUCCH or PUSCH. In this case, if there are no HARQ-ACK bit(s) as in the above examples (i.e., HARQ-ACK bit(s) to be included in the HARQ-ACK codebook), the UE may not report HARQ-ACK information for the SPS.

(Method 9-1-5)

For a specific SPS configuration of a specific cell, if all SPS PDSCH slots are fully or partially within the first period (i.e., overlapping with the first period), the corresponding HARQ-ACK bit(s) may be indicated as NACK. That is, the corresponding HARQ-ACK bit(s) may be included in the HARQ-ACK codebook as NACK information.

(Method 9-1-6)

For all SPS configurations of a specific cell, if all SPS PDSCH slots are fully or partially within the first period (i.e., overlapping with the first period), the corresponding HARQ-ACK bit(s) may be indicated as NACK. That is, the corresponding HARQ-ACK bit(s) may be included in the HARQ-ACK codebook as NACK information.

Additionally, in relation to the operations described above in the present disclosure, for activated SPS configuration(s), a UE that has received SPS PDSCH through a single serving cell may operate to configure the HARQ-ACK codebook or determine whether to transmit the corresponding PUCCH (or UCI) based on one or more of the following methods.

(Method 9-2-1)

For all SPS configurations of the serving cell, if all SPS PDSCH slots are fully or partially within the first period (i.e., overlapping with the first period), the corresponding HARQ-ACK bit(s) may not be included in the HARQ-ACK codebook. Accordingly, the UE may construct the HARQ-ACK codebook to include HARQ-ACK bit(s) for the remaining PDCCH/PDSCH transmissions (e.g., SPS activation/release) excluding HARQ-ACK information for SPS PDSCH.

(Method 9-2-2)

For all SPS configurations of the serving cell, if all SPS PDSCH slots are fully or partially within the first period (i.e., overlapping with the first period), the corresponding HARQ-ACK bit(s) may be indicated as NACK. That is, the corresponding HARQ-ACK bit(s) may be included in the HARQ-ACK codebook as NACK information.

(Method 9-2-3)

For all SPS configurations of the serving cell, if all SPS PDSCH slots are fully or partially within the first period (i.e., overlapping with the first period), the UE may not transmit the corresponding PUCCH (or PUSCH).
Additionally, in relation to the operations described above in the present disclosure, for activated SPS configuration(s), a UE that has received SPS PDSCH through multiple serving cells configured via carrier aggregation (CA) may operate to construct the HARQ-ACK codebook or determine whether to transmit the corresponding PUCCH (or UCI) based on one or more of the following methods.

(Method 9-3-1)

For all SPS configurations of all serving cells, if all SPS PDSCH slots are fully or partially within the first period (i.e., overlapping with the first period), the corresponding HARQ-ACK bit(s) may not be included in the HARQ-ACK codebook. Accordingly, the UE may construct the HARQ-ACK codebook to include HARQ-ACK bit(s) for the remaining PDCCH/PDSCH transmissions (e.g., SPS activation/release) excluding HARQ-ACK information for SPS PDSCH.

(Method 9-3-2)

For all SPS configurations of all serving cells, if all SPS PDSCH slots are fully or partially within the first period (i.e., overlapping with the first period), the corresponding HARQ-ACK bit(s) may be indicated as NACK. That is, the corresponding HARQ-ACK bit(s) may be included in the HARQ-ACK codebook as NACK information.

(Method 9-3-3)

For all SPS configurations of all serving cells, if all SPS PDSCH slots are fully or partially within the first period (i.e., overlapping with the first period), the UE may not transmit the corresponding PUCCH (or PUSCH).

(Method 9-3-4)

If a specific serving cell is within the first period, HARQ-ACK bit(s) for SPS configuration(s) in that cell may not be included in the HARQ-ACK codebook. Accordingly, for the remaining serving cell(s) excluding the specific cell, HARQ-ACK bit(s) for SPS PDSCH slots of all activated SPS configurations may be included in the HARQ-ACK codebook.

(Method 9-3-5)

If a specific serving cell is within the first period, HARQ-ACK bit(s) for SPS configuration(s) in that cell may be indicated as NACK. That is, the corresponding HARQ-ACK bit(s) may be included in the HARQ-ACK codebook as NACK information.

(Method 9-3-6)

If SPS transmission for a specific SPS configuration of a specific serving cell is fully or partially within the first period (i.e., all SPS PDSCH slots overlap with the first period), HARQ-ACK bit(s) for the corresponding SPS configuration(s) of that cell may not be included in the HARQ-ACK codebook. Accordingly, the UE may construct the HARQ-ACK codebook to include HARQ-ACK bit(s) in the following cases, excluding the aforementioned HARQ-ACK bit(s).

For example, for the remaining serving cell(s) excluding the specific serving cell, HARQ-ACK bit(s) for SPS PDSCH slots of all activated SPS configurations may be included to construct the HARQ-ACK codebook. Additionally, for the specific serving cell, HARQ-ACK bit(s) for SPS slots of all activated SPS configurations excluding the specific SPS configuration may be included in the HARQ-ACK codebook.

The UE may transmit the HARQ-ACK codebook constructed as described above through PUCCH or PUSCH. In this case, if there are no HARQ-ACK bit(s) as in the above examples (i.e., HARQ-ACK bit(s) to be included in the HARQ-ACK codebook), the UE may not report HARQ-ACK information for SPS.

(Method 9-3-7)

If SPS transmission for a specific SPS configuration of a specific serving cell is fully or partially within the first period (i.e., all SPS PDSCH slots overlap with the first period), HARQ-ACK bit(s) for the corresponding SPS configuration(s) of that cell may be indicated as NACK. That is, the corresponding HARQ-ACK bit(s) may be included in the HARQ-ACK codebook as NACK information.

In this regard, when an A/N PUCCH for an SPS is configured, a base station may indicate the configuration of a HARQ-ACK codebook based on one or more of the following methods through an RRC message or DCI. Here, corresponding DCI may be SPS activation DCI.

(Method 9-4-1)

A base station may configure whether to configure a HARQ-ACK codebook for an SPS PDSCH only for the remaining serving cell(s) excluding a cell with NES OFF through RRC signaling/message.

(Method 9-4-2)

A base station may indicate whether to configure a HARQ-ACK codebook for an SPS PDSCH only for the remaining serving cell(s) excluding a cell with NES OFF through DCI.

(Method 9-4-3)

A base station may configure whether to configure a codebook for indicating all HARQ-ACK for an SPS PDSCH as NACK for a cell with NES OFF and indicating all HARQ-ACK of the remaining serving cell(s) as ACK or NACK through RRC signaling/message.

(Method 9-4-4)

A base station may indicate whether to configure a codebook for indicating all HARQ-ACK for an SPS PDSCH as NACK for a cell with NES OFF and indicating all HARQ-ACK of the remaining serving cell(s) as ACK or NACK through DCI.

A terminal may configure a HARQ-ACK codebook for an SPS PDSCH (i.e., a sub-codebook for an SPS PDSCH) by using one or a part of the above-described methods. If HARQ-ACK transmission for an SPS PDSCH and HARQ-ACK transmission for a dynamic PDSCH scheduled by DCI (e.g., a unicast PDSCH) are multiplexed and transmitted, a terminal may configure the entire HARQ-ACK codebook by additionally combining a HARQ-ACK codebook for an SPS PDSCH (i.e., a sub-codebook for an SPS PDSCH) in addition to the first sub-codebook and the second sub-codebook. If the second sub-codebook does not exist, a terminal may configure the entire HARQ-ACK codebook by additionally combining a sub-codebook for an SPS PDSCH with the first sub-codebook. In this case, HARQ-ACK transmission for a dynamic PDSCH may be configured in a Type-2 manner, but may also be configured in other manners.

If it is determined not to configure a sub-codebook for an SPS PDSCH according to the above-described method, a terminal may configure the entire HARQ-ACK codebook only with a HARQ-ACK codebook for a dynamic PDSCH (i.e., the first sub-codebook and/or the second sub-codebook) and transmit it to a base station.

If it is determined to configure a sub-codebook for an SPS PDSCH according to the above-described method, but there is no dynamic PDSCH scheduled by DCI and/or if a part or all of the dynamic PDSCH transmissions belong to the first period and/or if PDSCH retransmissions are not scheduled, a terminal may configure the entire HARQ-ACK codebook only with a sub-codebook for an SPS PDSCH without a HARQ-ACK codebook for a dynamic PDSCH (i.e., the first sub-codebook and the second sub-codebook) and transmit it to a base station.

Additionally, when a HARQ-ACK codebook for a unicast PDSCH is configured as a codebook type other than Type-2 (e.g., a Type-1 codebook or a Type-3 codebook), when it is determined to configure a sub-codebook for an SPS PDSCH according to the above-described method, but there is no dynamic PDSCH scheduled by DCI, and/or when a part or all of the all dynamic PDSCH transmissions belong to the first period, and/or when PDSCH retransmissions are not scheduled, a terminal may configure the entire HARQ-ACK codebook only with HARQ-ACK information for an SPS PDSCH without a HARQ-ACK codebook for a dynamic PDSCH or HARQ-ACK information and transmit it to a base station.

According to the above-described methods, for example, when all SPS PDSCH occasions on all cells associated with a HARQ-ACK slot are included in the non-active period of cell DTX or are included in the first period, a terminal may omit a sub-codebook part for an SPS PDSCH from configuration or transmission when configuring and/or transmitting the entire Type-2 HARQ-ACK codebook. In this regard, for a Type-1 codebook, when there is no DL DCI and/or PDSCH scheduled in a DL slot associated with the same HARQ-ACK slot, a sub-codebook part for an SPS PDSCH may be omitted from configuration or transmission.

Additionally, when only a part of the SPS PDSCH occasions of all cells associated with a HARQ-ACK slot is included in the non-active period of cell DTX or is included in the first period, a terminal may additionally configure and transmit a sub-codebook part for an SPS PDSCH to the entire Type-2 HARQ-ACK codebook according to the existing method when configuring and/or transmitting the entire Type-2 HARQ-ACK codebook. In this regard, for a Type-1 codebook, when there is no DL DCI and/or PDSCH scheduled in a DL slot associated with the same HARQ-ACK slot, a terminal may configure and transmit a HARQ-ACK codebook only with a sub-codebook for an SPS PDSCH according to the existing method.

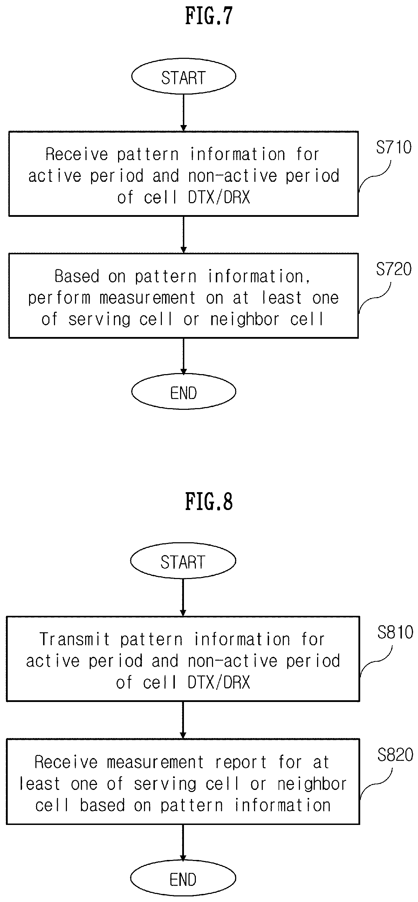

FIGS. 7 and 8 described below illustrate a terminal operation and a base station operation for performing measurement on a serving cell/a neighbor cell regarding a cell DTX/DRX operation according to embodiments of the present disclosure.

FIG. 7 is a diagram for describing the operation of a terminal in a wireless communication system to which the present disclosure may be applied.

Referring to FIG. 7, a terminal may receive pattern information for the active period and/or non-active period of cell-related DTX or DRX from a base station S710.

In this regard, a terminal may receive corresponding pattern information through system information, RRC signaling/message, an MAC-CE, etc.

Additionally or alternatively, when a plurality of pattern information is configured for the active period and non-active period of cell-related DTX or DRX, a terminal may receive an indication to activate or deactivate one or more pattern information among a plurality of pattern information. For example, when a terminal is in an RRC-based idle state or inactive state, a plurality of pattern information may be configured through system information and may be indicated through paging-related downlink control information (DCI) that activates or deactivates one or more pattern information.

Thereafter, a terminal may perform measurement on at least one of a serving cell or a neighbor cell based on corresponding pattern information and report a result for corresponding measurement to a base station S720.

Specifically, a terminal may confirm a period in which a cell DTX/DRX operation is activated or a period in which a cell DTX/DRX operation is deactivated based on pattern information received by itself and may perform or may not perform a measurement operation on a serving cell/a neighbor cell based on confirmed period information or may perform restricted measurement.

In this regard, when measurement on a serving cell is performed during the above-described non-active period, measurement on a serving cell during a corresponding non-active period may correspond to restricted measurement performed based on a pre-configured condition.

For example, measurement on a serving cell during the non-active period of cell DTX/DRX may be performed periodically during a specific time period and the periodicity of measurement on a serving cell during a non-active period may be configured to be longer than the periodicity of measurement on a serving cell during the active period of cell DTX/DRX.

Additionally or alternatively, measurement on a serving cell during the non-active period of cell DTX/DRX may be performed for one or more synchronization signal block (SSB) indexes or one or more channel state information-reference signal (CSI-RS) resources designated (i.e., configured or indicated) by a base station.

Additionally or alternatively, measurement on a serving cell during the non-active period of cell DTX/DRX may be performed when a measurement value for a serving cell is greater than or equal to a pre-configured threshold for the above-described restricted measurement. Alternatively, measurement on a serving cell during the non-active period of cell DTX/DRX may also be performed when a measurement value for a serving cell is less than or equal to a pre-configured threshold for the above-described restricted measurement.

When measurement on a neighbor cell is performed during the above-described non-active period, measurement on a neighbor cell during a corresponding non-active period may be performed on one or more SSB indexes or one or more CSI-RS resources designated by a base station. Additionally or alternatively, when measurement on a neighbor cell is performed during the above-described non-active period, measurement on a neighbor cell during a corresponding non-active period may be performed on one or more measurement objects designated by a base station. As an example, one or more measurement objects may correspond to at least one of one or more neighbor cells or one or more frequencies to be measured by a terminal.

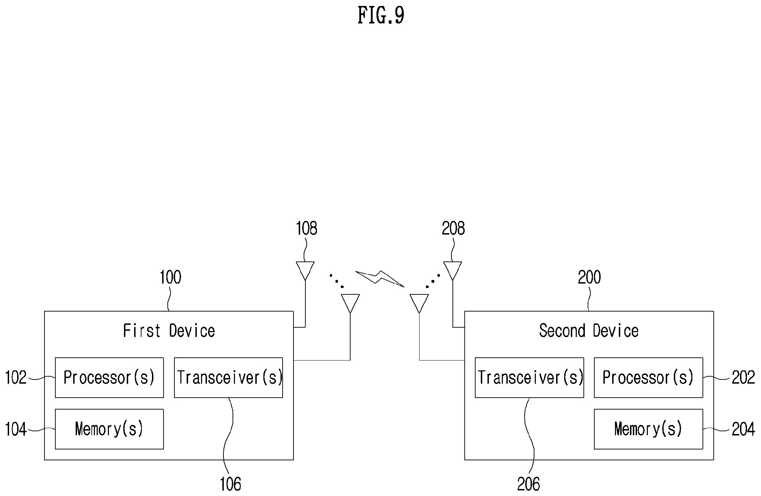

A method described in the example of FIG. 7 may be performed by the first device 100 in FIG. 9. In other words, a terminal in FIG. 9 may be implemented as the first device 100. For example, at least one processor 102 of the first device 100 in FIG. 9 may be configured to receive pattern information for the active period and/or non-active period of cell-related DTX or DRX through at least one transceiver 106 and perform measurement on at least one of a serving cell or a neighbor cell based on corresponding pattern information.

Furthermore, at least one memory 104 of the first device 100 may store instructions for performing a method according to the example of FIG. 7 or embodiments described above in the present disclosure when executed by at least one processor 102.

FIG. 8 is a diagram for describing the operation of a base station in a wireless communication system to which the present disclosure may be applied.

Referring to FIG. 8, a base station may transmit/broadcast pattern information for the active period and/or non-active period of cell-related DTX or DRX to a terminal S810.

Thereafter, a base station may receive a measurement report for at least one of a serving cell or a neighbor cell performed based on pattern information from a terminal S820.

Specifically, a base station may transmit pattern information to a terminal to configure/instruct a terminal to perform or not to perform a measurement operation or to perform restricted measurement according to a period in which a cell DTX/DRX operation is activated and/or a period in which a cell DTX/DRX operation is deactivated.

In this regard, when measurement on a serving cell is performed during the above-described non-active period, measurement on a serving cell during a corresponding non-active period may correspond to restricted measurement performed based on a pre-configured condition.

Since specific features for restricted measurement on a serving cell during a non-active period, (limited) measurement on a neighbor cell during a non-active period, pattern information for the active period and/or non-active period of cell DTX/DRX, transmission and reception of corresponding pattern information, etc. are the same as described by referring to FIG. 7, an overlapping description is omitted.

A method described in the example of FIG. 8 may be performed by the second device 200 in FIG. 9. In other words, a base station in FIG. 8 may be implemented as the second device 200. For example, at least one processor 202 of the second device 200 in FIG. 9 may be configured to transmit/broadcast pattern information for the active period and/or non-active period of cell-related DTX or DRX through at least one transceiver 206 and receive a measurement report for at least one of a serving cell or a neighbor cell based on corresponding pattern information.

Furthermore, at least one memory 204 of the second device 200 may store instructions for performing a method according to the example of FIG. 8 or embodiments described above in the present disclosure when executed by at least one processor 202.

General Device to which the Present Disclosure may be applied

FIG. 9 illustrates a block diagram of a wireless communication device according to an embodiment of the present disclosure.

Referring to FIG. 9, the first device 100 and the second device 200 may transmit and receive a wireless signal through a variety of radio access technologies (e.g., LTE, LTE-A, LTE-A pro, NR, 5G, 5G-A, 6G).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a device XXX, YYY of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G, 6G system, but may be applied to various wireless communication systems other than the 3GPP LTE/LTE-A, 5G, 6G system.

**Claims**

**1.** A method performed by a terminal in a wireless communication system, the method comprising:

receiving pattern information for at least one of an active period or a non-active period of cell-related discontinuous transmission (DTX) or discontinuous reception (DRX); and

based on the pattern information, performing measurement on at least one of a serving cell or a neighbor cell, wherein based on measurement on the serving cell being performed during the non-active period, the measurement on the serving cell during the non-active period corresponds to restricted measurement performed based on a pre-configured condition.

2. The method of claim 1,

   wherein the measurement on the serving cell during the non-active period is performed periodically during a specific time period, and
   wherein a periodicity of the measurement on the serving cell during the non-active period is configured to be longer than a periodicity of measurement on the serving cell during the active period.

3. The method of claim 1,
   wherein the measurement on the serving cell during the non-active period is performed for one or more synchronization signal block (SSB) indexes or one or more channel state information-reference signal (CSI-RS) resources designated by a base station.

4. The method of claim 1,
   wherein the measurement on the serving cell during the non-active period is performed when a measurement value for the serving cell is greater than or equal to a threshold which is pre-configured for the restricted measurement.

5. The method of claim 1,
   wherein the measurement on the serving cell during the non-active period is performed when a measurement value for the serving cell is less than or equal to a threshold which is pre-configured for the restricted measurement.

6. The method of claim 1,
   wherein based on measurement on the neighbor cell being performed during the non-active period, the measurement on the neighbor cell during the non-active period is performed for one or more SSB indexes or one or more CSI-RS resources designated by a base station.

7. The method of claim 1,
   wherein based on measurement on the neighbor cell being performed during the non-active period, the measurement on the neighbor cell during the non-active period is performed for one or more measurement objects designated by a base station.

8. The method of claim 7,
   wherein the one or more measurement objects correspond to at least one of one or more neighbor cells or one or more frequencies to be measured.

9. The method of claim 1,
   wherein based on a plurality of pattern information for the active period and the non-active period of the cell-related DTX or DRX being configured, the method further includes receiving an indication to activate or deactivate one or more pattern information among the plurality of pattern information.

10. The method of claim 9,
    wherein based on the terminal being in a radio resource control(RRC)-based idle state or inactive state, the plurality of pattern information:

    is configured through system information, and
    is indicated through downlink control information (DCI) related to paging for activating or deactivating the one or more pattern information.

11. A terminal on a wireless communication system, the terminal comprising:

    at least one transceiver; and
    at least one processor connected to the at least one transceiver,

# EP 4 776 549 A1

wherein the at least one processor is configured to:

receive pattern information for at least one of an active period or a non-active period of cell-related discontinuous transmission (DTX) or discontinuous reception (DRX); and
based on the pattern information, perform measurement on at least one of a serving cell or a neighbor cell,

wherein based on measurement on the serving cell being performed during the non-active period, the measurement on the serving cell during the non-active period corresponds to restricted measurement performed based on a pre-configured condition.

12. A method performed by a base station in a wireless communication system, the method comprising:

transmitting pattern information for at least one of an active period or a non-active period of cell-related discontinuous transmission (DTX) or discontinuous reception (DRX); and
receiving a measurement report for at least one of a serving cell or a neighbor cell based on the pattern information,
wherein based on measurement on the serving cell being performed during the non-active period, the measurement on the serving cell during the non-active period corresponds to restricted measurement performed based on a pre-configured condition.

13. A base station on a wireless communication system, the base station comprising:

at least one transceiver; and
at least one processor connected to the at least one transceiver,
wherein the at least one processor is configured to:

transmit pattern information for at least one of an active period or a non-active period of cell-related discontinuous transmission (DTX) or discontinuous reception (DRX); and
receive a measurement report for at least one of a serving cell or a neighbor cell based on the pattern information,

wherein based on measurement on the serving cell being performed during the non-active period, the measurement on the serving cell during the non-active period corresponds to restricted measurement performed based on a pre-configured condition.

14. A processing apparatus configured to control a terminal for performing measurement in a wireless communication system, the processing apparatus comprising:

at least one processor; and
at least one computer memory operatively coupled to the at least one processor and storing instructions for performing a method according to any one of claims 1 to 10 upon being executed by the at least one processor.

15. At least one non-transitory computer readable medium storing at least one instruction, wherein:
the at least one instruction controls an apparatus for performing uplink transmission in a wireless communication system to perform a method according to any one of claims 1 to 10 by being executed by at least one processor.

# FIG.1

# FIG.2

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$    $l = 14 \cdot 2^{\mu} - 1$

# FIG.4

# FIG.5

# FIG.6

UE (110)                                                                 BS (110)

Synchronization (101)

Obtain System Information (103)

Random Access (105)

Control Information Signaling (107)

Transmit/Receive Data (109)

## FIG.7

```
            ┌─────────┐
            │  START  │
            └────┬────┘
                 │
                 ▼
    ┌────────────────────────────┐
    │  Receive pattern information for  │   S710
    │  active period and non-active period │
    │      of cell DTX/DRX         │
    └────────────┬───────────────┘
                 │
                 ▼
    ┌────────────────────────────┐
    │   Based on pattern information,   │   S720
    │ perform measurement on at least one │
    │   of serving cell or neighbor cell  │
    └────────────┬───────────────┘
                 │
                 ▼
            ┌─────────┐
            │   END   │
            └─────────┘
```

## FIG.8

```
            ┌─────────┐
            │  START  │
            └────┬────┘
                 │
                 ▼
    ┌────────────────────────────┐
    │  Transmit pattern information for  │   S810
    │  active period and non-active period │
    │      of cell DTX/DRX         │
    └────────────┬───────────────┘
                 │
                 ▼
    ┌────────────────────────────┐
    │  Receive measurement report for at  │   S820
    │ least one of serving cell or neighbor │
    │  cell based on pattern information  │
    └────────────┬───────────────┘
                 │
                 ▼
            ┌─────────┐
            │   END   │
            └─────────┘
```

EP 4 776 549 A1

# FIG.9

# EP 4 776 549 A1

| INTERNATIONAL SEARCH REPORT | International application No. |
|---|---|
| | **PCT/KR2024/013673** |

**A. CLASSIFICATION OF SUBJECT MATTER**

**H04L 1/1812**(2023.01)i

According to International Patent Classification (IPC) or to both national classification and IPC

**B. FIELDS SEARCHED**

Minimum documentation searched (classification system followed by classification symbols)

H04L 1/1812(2023.01); H04B 7/06(2006.01); H04W 68/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DTX(Discontinuous Transmission), DRX(Discontinuous Reception), 활성화 구간 (activation period), 비활성화 구간(deactivation period), 패턴 정보(pattern information), 제한적 측정(limited measurement)

**C. DOCUMENTS CONSIDERED TO BE RELEVANT**

| Category* | Citation of document, with indication, where appropriate, of the relevant passages | Relevant to claim No. |
|---|---|---|
| Y | SAMSUNG. Enhancements on cell DTX/DRX mechanism. R1-2303142, 3GPP TSG RAN WG1 #112bis-e, e-Meeting. 07 April 2023.<br>See sections 2 - 3.2. | 1-15 |
| Y | KR 10-2021-0125877 A (SAMSUNG ELECTRONICS CO., LTD.) 19 October 2021 (2021-10-19)<br>See paragraphs [0466]-[0470]; and figure 17. | 1-15 |
| Y | KR 10-2019-0095230 A (ASUSTEK COMPUTER INCORPORATION) 14 August 2019 (2019-08-14)<br>See paragraph [0539]; and claims 3 and 5. | 2-8 |
| A | LG ELECTRONICS INC. Discussion on DTX/DRX mechanism. R2-2303152, 3GPP TSG-RAN2 #121bis electronic. [Online]. 07 April 2023.<br>See section 2. | 1-15 |
| A | WO 2023-151018 A1 (APPLE INC.) 17 August 2023 (2023-08-17)<br>See paragraphs [0137]-[0139]; and figure 8. | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 December 2024** | **27 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/013673** |

| Patent document cited in search report | | | Publication date (day/month/year) | Patent family member(s) | | | Publication date (day/month/year) |
| --- | --- | --- | --- | --- | --- | --- | --- |
| KR | 10-2021-0125877 | A | 19 October 2021 | US | 2023-0300940 | A1 | 21 September 2023 |
| | | | | WO | 2021-206512 | A1 | 14 October 2021 |
| KR | 10-2019-0095230 | A | 14 August 2019 | CN | 108462515 | A | 28 August 2018 |
| | | | | CN | 108462515 | B | 05 July 2022 |
| | | | | EP | 3337055 | A1 | 20 June 2018 |
| | | | | EP | 3337055 | A3 | 03 October 2018 |
| | | | | EP | 3337055 | B1 | 05 July 2023 |
| | | | | ES | 2953534 | T3 | 14 November 2023 |
| | | | | JP | 2018-098783 | A | 21 June 2018 |
| | | | | JP | 2019-220982 | A | 26 December 2019 |
| | | | | JP | 2022-031847 | A | 22 February 2022 |
| | | | | JP | 7320044 | B2 | 02 August 2023 |
| | | | | KR | 10-2018-0068282 | A | 21 June 2018 |
| | | | | KR | 10-2204020 | B1 | 18 January 2021 |
| | | | | TW | 201822484 | A | 16 June 2018 |
| | | | | TW | 201904214 | A | 16 January 2019 |
| | | | | TW | I644530 | B | 11 December 2018 |
| | | | | TW | I681645 | B | 01 January 2020 |
| | | | | US | 11240753 | B2 | 01 February 2022 |
| | | | | US | 2018-0167883 | A1 | 14 June 2018 |
| | | | | US | 2022-0116869 | A1 | 14 April 2022 |
| WO | 2023-151018 | A1 | 17 August 2023 | CN | 118715837 | A | 27 September 2024 |
| | | | | KR | 10-2024-0144989 | A | 04 October 2024 |

Form PCT/ISA/210 (patent family annex) (July 2022)